# EUROPEAN PATENT APPLICATION

(11) **EP 2 120 205 A1**
(43) Date of publication of application: **18.11.2009**
(21) Application number: 07730332.9
(22) Date of filing: 16.02.2007
(51) Int. Cl.: G06Q 40/00

(54) **METHOD AND SYSTEM FOR PERFORMING BANKING TRANSACTIONS BY SIMULATING A VIRTUAL ATM BY MEANS OF A MOBILE TELECOMMUNICATIONS DEVICE**

(30) Priority: 28.11.2006 WO PCT/ES2006/000663
(71) Applicant: Nilutesa, S.L., 28760 Tres Cantos Madrid (ES)
(72) Inventor: LUCA DE TENA SAINZ, Nicolás, 28760 Tres Cantos - Madrid (ES)
(74) Representative: ABG Patentes, S.L.
(86) International application number: PCT/ES2007/000091
(87) International publication number: WO 2008/065215

(57) **Abstract**

Method and system for carrying out all the transactions performable at an ATM, with the exception of provision of cash, by means of a mobile telecommunications device, specifically a third generation (3G) mobile telephone and the UMTS network. The system comprises the modules (2, 4, 5) necessary for securely carrying out said transactions, by means of access to the ATM by using a virtual emulation thereof, and outside existing networks and protocols now used for these types of transactions.

## Description

### TECHNICAL FIELD OF THE INVENTION

The field of application of the invention is found within the general telecommunications industrial sector, and more specifically in the scope of carrying out banking operations via mobile telecommunications devices, especially in that related to the management of the services available through ATMs.

### BACKGROUND OF THE INVENTION

The performance of operations such as informative queries, mobile recharging and transfer orders which are currently carried out through an automated teller machine of the type which different banking institutions make available to their clients, constitutes a highly used resource nowadays, having currently become an essential and recurrent service for many users. Currently, however, the performance of these banking operations demands the physical presence of the user in front of the ATM itself.

Currently, these operations performed at ATMs are protected by the use of a physical identificative support with magnetic band, such as for example cards or savings books, and of a personal identification number (PIN) known by the user, which permit them or authorize them to carry out the operations offered by the ATM which the petitioner deems appropriate, the account holder or payment instrument, or other authorized user or person who knows the PIN in possession of the payment instrument, being the only ones who can make transactions at the ATM.

The only alternatives which currently exist to perform these transactions without physically being present are the so-called Internet banking and telephone banking. However, these systems feature clear drawbacks. Internet banking requires the user to have a certain fixed infrastructure, which does not only prevent the ubiquity of said operative or the possibility of being able to use it whenever the need to make a transaction arises, but that it requires above all a significant specific investment, as well as a certain technical capability.

Access via a telephone banking "call center" brings about a rejection barrier in which the lack of anonymity which stems from being attended to by natural persons or the lack of usability of the automatic IVR (*Interactive Voice Recognition*) systems, make carrying out said transactions difficult and hinder them.

Access via PDA's or terminals which previously download an embedded application is subject to the often times complex programming and configuration of the Terminal. This type of applications incurs high maintenance costs because the terminals themselves are often deprogrammed by the downloading of other applications or by the appearance of destructive viruses.

### DESCRIPTION OF THE INVENTION

The present invention relates to a method and system for carrying out all of the transactions that can be performed at an ATM, with the exception of provision of cash, by means of a mobile telecommunications device which is capable of establishing a video connection, specifically a third generation (3G) mobile telephone and the UMTS network. This system provides essential characteristics which are novel and offer notable advantages over the means which are known and used for the same purposes in the current state of the art.

More specifically, the object of the invention consists of an architecture which comprises the modules necessary for securely carrying out said transactions, by means of access to a virtual emulation the ATM, and all of this outside existing networks and protocols now used for these types of transactions.

Therefore, the invention proposes the implementation of a series of emulation and management modules which access the communication network necessary for the final functionality, i.e., the virtual emulation of the ATM in ht mobile telecommunications device, as long as this does not imply availability of cash.

This and other objectives of the invention are achieved by means of a method according to claim 1, a system accordance to claim 15 and a computer programme according to claim 20. The specific embodiments of the method object of the invention are defined in the dependent claims 2 to 14, and those corresponding to the system in the dependent claims 16 to 19.

All of the previously described drawbacks presented by carrying out transactions via physical ATMs, via Internet banking, via telephone banking, with terminals with embedded applications and other terminals and similar systems, are resolved in the present invention, so that significant improvements are made with respect to what is currently known and used as it can access said services from any place and without requiring physical presence in front of an ATM.

Additionally, the number of ATMs of each financial institution is limited and the maintenance thereof is costly. The innovation of being able to bring the ATM to any mobile device of the user which is capable of establishing a video connection (UMTS, CDMA, HSDPA, WIFI, WIMAX, etc. technologies) would permit the multiplication of access points by a factor of several thousand, i.e., the number of "virtual" ATMs. Consequently, if the user interface is identical to that which exists at each ATM, there would be no rejection of the recurrent use thereof given that no additional learning would be required, nor would there be the previously mentioned drawbacks of access via the Internet, a "call center" or a specific pre-programmed and non-universal device.

Taking the current situation pertaining to transactions of the aforementioned type into account, the invention has been proposed as the main objective of the development of a method by means whereof it will be possible to simplify everything necessary to securely carry out informative transactions, of recharging mobile telephones and transfer orders ubiquitously from anywhere so that those transactions can be made easily without learning costs for the user, without limitations due to the infrastructure required and remotely without requiring a physical presence in front of an ATM and without the numeric limitation thereof The idea is focused on the use of a mobile telecommunications device which can make a video connection (3G, CDMA, etc...) with which to quickly, universally and efficiently make a video-call to an emulation platform of the ATM itself so that the user does not need to be in front of a physical ATM. The proposed transaction will be subject, of course, to the authorization of the mobile telecommunications device by the issuer, in the first place, and subsequently to the entering of a personal PIN number, just as is done at a physical ATM, which is associated to the mobile telecommunications device itself.

### BRIEF DESCRIPTION OF THE DRAWINGS

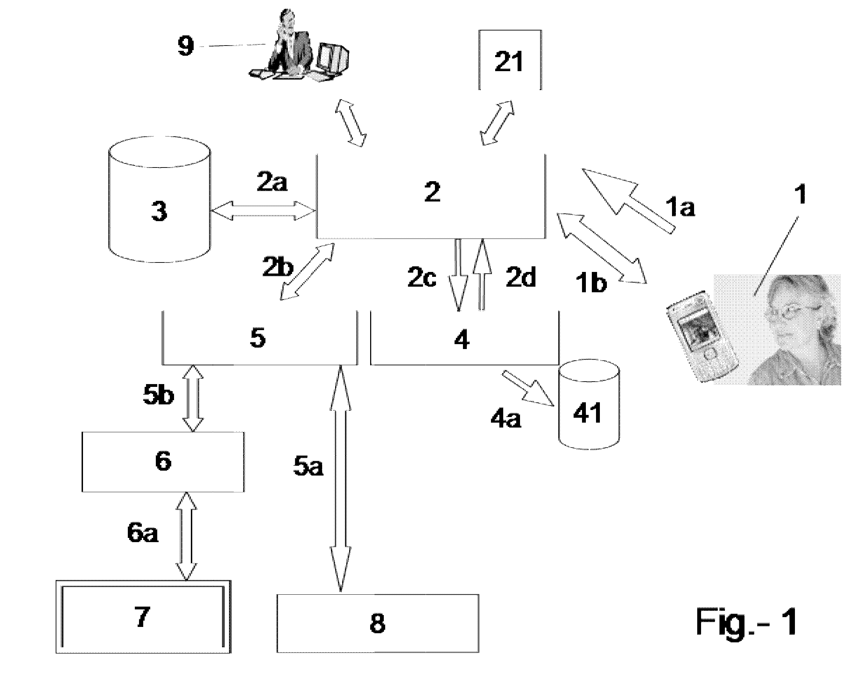

These and other characteristics and advantages of the invention will be more clearly stated from the detailed description which follows in a preferred embodiment, given solely by way of an illustrative and non-limitative example, with reference to the accompanying figure (figure 1), wherein a block diagram of a preferred embodiment is represented, by means whereof is provided a general outline of the system or series of actions proposed by the invention for the final embodiment of the transaction selected with the use of a mobile telephone which can be used to make video-calls (3G) and by means of transmission via the UMTS network.

### DETAILED DESCRIPTION OF A PREFERRED EMBODIMENT OF THE INVENTION

As indicated in the foregoing, the detailed description of the invention is going to be carried out by taking the representations of the attached drawings into consideration, wherethrough the same numeric references are used to designate the equal or similar parts. In this sense, in Figure 1 an example of the system of the invention can be observed in relation to the following actions for carrying out a transaction of the type proposed, by means of a mobile telecommunications device which is capable of establishing a video connection and with the use of the emulation platform of the virtual ATM, wherethrough these types of transactions are performed, without needing to be physically in front of the ATM itself.

Examples of technologies which are capable of making a video connection are the 3G-UMTS, HSPDA, CDMA, WIFI, WIMAX, etc. technologies.

In this explanation, mobile telecommunications device is that which permits the establishment of a video connection through, for example, a packet switched network or a telephone switching network.

Notwithstanding this, only third generation 3G telephone terminals and UMTS network terminals will be mentioned in this explanation, although as has been stated, the method and system of the invention are applicable to any system which permits the establishment of a video connection.

More specifically, the system proposed by the invention is equipped to be able to carry out the entire process associated with the transactions that an ATM can administer according to the method which is also proposed by the invention.

This method is made up of an initial phase, identified in the figure with the label 1a, that corresponding to the step wherein the user, identified in the figure with the numeric reference 1, makes a video-call from a 3G telephone to the telephone number provided by the financial institution. Upon making this video-call, the user accesses the 3G access platform of the financial institution labelled as 2 in Figure 1. This platform can be single (single bank) or shared (multiple bank) so that the holder of the system object of this invention can provide services to more than one bank simultaneously.

Once the 3G system answers the call, it will send a screen or video presentation which will be viewed on the telephone terminal of the client/user. Immediately thereafter, the client /user will enter their identificative information of their bank card by means of the telephone keypad. Alternative methods of identification can also be used without pushing the telephone keys. It is possible that the user (1) can enter the identificative information of the step (1a) by means of their own voice with contingent recognition of their phonetic fingerprint. Alternatively, the identificative information can be entered by means of the automatic reading of their bank card which contains an electronic chip for the mobile telephone. According to another alternative, the user (1) does not have to enter any identificative information as their telephone terminal is automatically recognized bijectively by the system from the identificative hardware of the telephone and/or its ANI (*Automatic Number Identification*) calling number. According to another alternative it is provided that the interaction with the telephone Terminal by the user (1), including the sending of the identificative information of the user, is carried out, not by means of the pushing of the telephone keypad, but by giving verbal instructions thereto which will be interpreted by the vocal recognition system (21) which can be associated to the platform (2).

Upon receiving this identification, in the step labelled as 2a in Figure 1, the platform 2 consults a database of the caller's identity to validate their identity and find out if this is one of their own clients of a client that does not belong to the bank and if they are authorized to make transactions or not. This database, labelled in the Figure as 3, will be supplied by the current internal processes of the bank, not represented in Figure 1.

In the steps labelled as 2c and 2d in Figure 1, and depending on whether or not it is a client of the bank accessed, platform 2 consults an applications server 4 of the content and graphic sequences which will be presented to the client, sequences which will be personalized according to the bank to which they belong.

This act is differential and characteristic of this invention as the result desired is that the interface present to the client is initially the same as the one they would see at a physical ATM. This identity of the presentation metaphor and user interface would prevent any rejection of the system, as it is completely familiar to the caller. Therefore, platform 2 will offer the same access menu offered by a physical ATM, and will give the same banking transaction options and information requests as a normal ATM (with the exception of the provision of cash for obvious reasons).

In a step labelled in the Figure as 1b, the user of the service 1, who is looking at the same menu options their mobile telephone screen that they would see at an ATM, decides and acts on the keypad thereof to select the transaction desired. As has been previously described, according to an alternative it is provided that the interaction with the telephone Terminal by the user (1) is carried out by giving verbal instructions thereto which will be interpreted by the vocal recognition system (2) which can be associated to the platform (2). In this case, the user (1) can select the desired transaction by giving verbal instructions.

In a subsequent step labelled in the Figure as 2b, the desired transaction is formatted by means of a module labelled in the Figure as module 5, which adapts the communication protocols, depending on the clients' banking institution so that the platform 2 can gain access transparently in order to carry out the desired transaction transparently and non-invasively for the systems now used.

If the client belongs to the bank which the number dialled gives them access to, the information request transaction operation or operation, labelled in the Figure as 5a, will be carried out by the bank's own "Backoffice" system, labelled in the Figure as 8.

If the client does not belong to the bank which the number dialled gives them access to, the information request transaction operation or operation, labelled in the Figure as 5b, it will be carried out through a communications server (6) which will connect to the banking systems of other institutions (7) in a step labelled in the Figure as 6a.

In order to maintain a traceability of the transactions performed, there is a database labelled as 41 in the figure, where the transactions made in the data stage (4a) will be taken down.

In a specific embodiment, the user (1), in addition to carrying out all of the ATM transactions, with the exception of provision of cash, can recharge their chip card or electronic purse with credit or "electronic money", which would, in fact, constitute the possibility of providing "virtual" cash.

During the entire process, the user (1) can, during the course of the virtual transaction with the ATM, initiate a video-call with an agent of the bank (9) or with an operator of their account, via the platform (2).

The functionality is performed, as has been previously described, from the modules represented in the Figure by means of the programming of said modules with one or more computer programmes.

The method proposed above has been developed nationally, but that should not be understood as limitative given that the system could be applied internationally by means of communication or processing between the communications server module 6 accessing the international equivalent thereof In any case, the essence of the invention remains the same or is even enhanced, given that it would permit citizens of other countries who are in transit to access their own ATMs "virtually".

It is not considered necessary to make the content of this description more extensive for a person skilled in the art to be able to understand the scope thereof and the advantages derived from the invention, as well as to carry out and put the object thereof into practice.

Nevertheless, it must be understood that the invention has been described according to a preferred embodiment thereof, which means that it can be modified if that does not alter the scope thereof in any way.

## Claims

1. Method for performing transactions which can be carried out at an ATM, with the exception of provision of cash, by means of a mobile telecommunications device which is capable of establishing a video connection, with or without card, without the user having to be in front of a physical ATM, **characterized in that** it comprises the following steps:
a) an initial step (1a), wherein the client of a banking institution (1) makes a video-call (1a) accessing an access platform (2) and the client's identificative information is sent to the platform,
b) a step (2a) wherein the platform (2) searches a data base (3) for the client's identity to validate the client's identity and whether or not the client is authorized to make transactions,
c) a step (2c), wherein, depending on the result of the previous step, the platform (2) searches an applications server (4) for the content and graphic sequences which are to be presented to the client (1).
d) a step (2d), wherein the applications server (4) informs the platform (2) of the contents to be presented,
e) a step (1b), wherein the user of the service (1) receives said content on the screen of their mobile telecommunications device, giving them the option to select the operative desired, and
f) a execution step (2b), so that the platform (2) can transparently access the operative desired wherein the transaction information request or operation is carried out by a banking system (7, 8).

2. Method according to claim 1, **characterized in that** the user (1) enters the identificative information from the step (1a) by entering the identificative information of his bank card by means of the keypad of the mobile communications device.

3. Method according to claim 1 or 2, **characterized in that** the user (1) enters the identificative information of the step (1a) by means of their own voice with contingent recognition of their phonetic fingerprint.

4. Method according to claim 1, **characterized in that** the mobile telecommunications device of the user (1) is recognized automatically and bijectively by the system from the identificative telephone hardware and its ANI calling number, making it unnecessary to enter any identificative information by the user (1).

5. Method according to claim 1, **characterized in that** the user (1) enters the identificative information of the step (1a) by means of the automatic reading of their bank card which contains an electronic chip in the mobile telecommunications device.

6. Method according to any of claims 1 to 5, **characterized in that** in the step (1b), the user (1) has the option of selecting the operative desired by pushing the keys on their telephone which correspond to the operative desired.

7. Method according to any of claims 1 to 6, **characterized in that** the interaction with the mobile telecommunications device by the user (1) is carried out by means of verbal instructions thereto which are interpreted by a vocal recognition system (21) which can be associated to the platform (2).

8. Method according to any of claims 1 to 7, **characterized in that** the user (1), in addition to carrying out all of the operations of the ATM with the exception of provision of cash, can recharge their chip card or electronic purse with credit or "electronic money" remotely, which, in fact, constitutes the possibility of providing "virtual" cash.

9. Method according to any of claims 1 to 8, **characterized in that** the user (1) can, during the course of the virtual transaction with the ATM, initiate a video-call with an agent of the bank (9) or with an operator of their account, through the platform (2).

10. Method according to any of claims 1 to 9, **characterized in that** in the step (2a) the platform (2) searches the database to see if it is one of their clients or a client from another bank, and **in that** in the execution step (2b) a module (5), adapts the communication protocols, depending on the banking institution of the client so that the platform (2) can transparently access the operative desired which will be performed in steps (5a) or (5b) depending whether the client is of the bank or another bank,
in the first case (5a) the information request or operation transaction is carried out by the bank's own "Backoffice" system (8), and
in the second case (5b) the information request or operation transaction is carried out via a communications server (6) which connects the banking systems of other banks (7) in step 6a.

11. Method according to any of claims 1 to 10, **characterized in that** it comprises a step (4a) wherein once the execution step (2b) has been completed the applications server (4) takes down the transactions performed in a database (41).

12. Method according to any of claims 1 to 11, **characterized in that** the mobile telecommunications device is a third generation (3G) mobile telephone terminal which operates on a UMTS network, and the platform (2) is a 3G platform.

13. Method according to any of claims 1 to 11, **characterized in that** the mobile telecommunications device is a mobile telephone terminal which operates on a network with CDMA technology, and the platform (2) is a CDMA platform.

14. Method according to any of claims 1 to 11, **characterized in that** the mobile telecommunications device is a mobile telephone terminal which operates on a network with HSDPA, WIMAX, or WIFI technology, and the platform (2) is a platform of the same technology.

15. System for carrying out transactions which can be performed at an ATM, with the exception of the provision of cash, by means of a mobile telecommunications device which is capable of establishing a video connection, with or without card, without the user having to be in front of the physical ATM, **characterized in that** it comprises:
• an access platform (2) which the client of a banking institution (1) can access by making a video-call (1a), the access platform being adapted to receive the client's identificative information,
the platform (2) additionally being adapted to search a database (3) for the identity of the client in order to validate the client's identity and whether or not the client is authorized to make transactions or not,
the platform (2) is also adapted to, depending on the result of the search in the database (3), search an applications server (4) for the content and graphic sequences which are to be presented to the client (1), and
• an applications server (4) to inform the platform (2) of the content to be presented, wherein the user of the service (1) receives said content on the screen of their mobile telecommunications device, giving the user the option to select the operative desired,
the platform (2) is also adapted to transparently access the operative desired wherein the information request or operation transaction is carried out by a banking system (7, 8).

16. System for carrying out of transactions according to claim 15, **characterized in that** the platform (2) is adapted to search the database for whether it is a client of the bank itself or a client of another bank, and **in that** it comprises an adaptation module (5) of the communication protocols, depending on the banking institution of the client, so that the platform (2) can transparently access the operative desired.

17. System for carrying out of transactions according to claim 15 to 16, **characterized in that** the mobile telecommunications device is a third generation (3G) mobile telephone terminal which operates on a UMTS network, and the platform (2) is a 3G platform.

18. System for carrying out of transactions according to claim 15 to 16, **characterized in that** the mobile telecommunications device is a mobile telephone terminal which operates on a network with CDMA technology, and the platform (2) is a CDMA platform.

19. System for carrying out of transactions according to claim 15 to 16, **characterized in that** the mobile telecommunications device is a mobile telephone terminal which operates on a network with HSDPA, WIMAX, or WIFI technology, and the platform (2) is a platform of the same technology.

20. Computer programme adapted to execute one or several of the steps of claims 1 to 14.
